# EUROPEAN PATENT SPECIFICATION

(11) **EP 2 141 255 B1**
(45) Date of publication and mention of the grant of the patent: **18.03.2020**
(21) Application number: 08159783.3
(22) Date of filing: 04.07.2008
(51) Int. Cl.: C23C 2/06, B60J 5/00, B60J 5/04, B23K 11/20

(54) **Improved corrosion inhibiting structure**
Verbesserte Korrosionsschutzstruktur
Structure améliorée d'inhibition de la corrosion

(43) Date of publication of application: 06.01.2010
(73) Proprietor: Volvo Car Corporation, 405 31 Göteborg (SE)
(72) Inventor: Ström, Mats, SE-44163 Allingsas, (SE); Johansson, Richard, SE-41673 Göteborg, (SE)
(74) Representative: Winqvist, Jens Pontus

(56) References cited:
- EP-A- 1 146 145
- EP-A- 1 930 194
- EP-A1- 1 806 200
- JP-A- 2001 335 973
- JP-A- 2003 341 547
- US-A1- 2003 067 187
- HOSKING N.C, STRÖM M.A. ET AL: "CORROSION RESISTANCE OF ZINC-MAGNESIUM COATED STEEL" CORROSION SCIENCE, vol. 49, 2007, XP002505324
- SONG G. JOHANNESSON B. ET AL: "GALVANIC CORROSION OF MAGNESIUM ALLOY AZ91D IN CONTACT WITH AN ALUMINIUM ALLOY, STEEL AND ZINC" CORROSION SCIENCE, vol. 46, 2004, XP002505325

## Description

### TECHNICAL FIELD

The present invention relates to a vehicle with a corrosion resistant metal assembly. The metal assembly has been found to be particularly useful in vehicle door structures.

### BACKGROUND OF THE INVENTION

Generally, problems of corrosion on automotive vehicles have been improved over the years with the usage of galvanized steel. Galvanized steel is a common procedure at which a sheet of steel is coated by hot dip galvanizing, in which the sheet is moved through a bath of molten zinc. The molten zinc adheres to the steel, and as the sheet leaves the bath, the surplus of the zinc can be removed by the aid of gas knifes. The publication of WO 2006002843 discloses the use of a steel sheet provided with a hot dip galvanized zinc alloy coating layer. The zinc alloy consists of: 0.3 - 2.3 weight % magnesium; 0.6 - 2.3 weight % aluminium; optional < 0.2 weight % of one or more additional elements; unavoidable impurities; the remainder being zinc. The zinc alloy coating can typically have a layer of a thickness of 5 - 12 µm. The zinc alloy coated steel sheet is said to have a good corrosion resistance and to be cheap to produce. The steel sheet described is further said to be used an as automotive part. The document is silent about any specific use however.

Furthermore, reduced weight in automotive vehicles is a main concern in order to reduce fuel consumption and CO₂ emissions. Reduced weight calls for lighter materials, where aluminum is one candidate. However, structures in vehicles are often exposed to high load or stress. In this sense, aluminium is generally considered as a poor substitute for a steel structure. Combinations of aluminium and stronger materials, such as steel, are more likely to be successful in this sense. However, attachment areas between these materials are very often exposed to corrosive road environment, as a consequence, these mixed metal assemblies has been avoided due to severe galvanic corrosion, partly due to the unnoble properties of aluminium. Although some precautionary attempts have been made to seal off such attachment areas from exposure, e.g. by using different sealing methods or waxes, these methods have been shown to be either insufficient or very expensive.

An example of such a solution is disclosed in the Japanese patent with the publication number JP 2001335973 in which a method for protecting a base post type aluminium construction which is connected to a steel base post from corrosion is disclosed. The steel base post is formed by galvanized steel or stainless steel. An insulating layer for electrically insulating contact or a sacrifice anode is positioned between the aluminium construction and the steel base post to prevent corrosion there between. This is however relative expensive and not well suited for mass production.

EP 1,930,194 A discloses a vehicle door comprising an outer panel and an inner panel, wherein the panels are mutually adjoined to form a three-dimensional structure for the door. The panels are mutually attached together along a bottom edge of the door at one or more attachment regions and the panels between the one or more attachment regions are disposed in a substantially spaced apart manner so as to form one or more elongate drainage and ventilation apertures in a region of the bottom edge. The one or more elongate apertures have a combined elongate length which is more than 50% of a length of the bottom edge of the door. The bottom edge is thereby substantially devoid of any form of folded joint, for example a hemming joint, mutually fixating the outer panel and inner panel together.

A paper by Hosking et al., entitled "Corrosion resistance of zinc-magnesium coated steel", published in Corrosion Science, volume 49, 2007, states that a significant body of work exists in the literature concerning the corrosion behaviour of zinc-magnesium coated steel (ZMG), describing its enhanced corrosion resistance when compared to conventional zinc-coated steel. This paper begins with a review of the literature and identifies key themes in the reported mechanisms for the attractive properties of this material. This is followed by an experimental programme where ZMG was subjected to an automotive laboratory corrosion test using acidified NaCl solution. A 3-fold increase in time to red rust compared to conventional zinc coatings was measured. X-ray diffraction, X-ray photoelectron spectroscopy and scanning electron microscopy were used to characterize the corrosion products formed. The corrosion products detected on ZMG included simonkolleite (Zn₅Cl₂(OH)₈ · H₂O), possibly modified by magnesium uptake, magnesium hydroxide (Mg(OH)₂) and a hydroxy carbonate species. It was proposed that the oxygen reduction activity at the (zinc) cathodes is reduced by precipitation of alkali-resistant Mg(OH)₂, which is gradually converted to more soluble hydroxy carbonates by uptake of atmospheric carbon dioxide. This lowers the surface pH sufficiently to allow thermodynamically for general precipitation of insoluble simonkolleite over the corroding surface thereby retarding the overall corrosion reactions, leaving only small traces of magnesium corrosion products behind. Such a mechanism is consistent with the experimental findings reported in the literature.

The article by Song et al., entitled "Galvanic corrosion of magnesium alloy AZ91D in contact with an aluminium alloy, steel and zinc ", published in Corrosion Science (2004), vol. 46, describes an investigation that was carried out into the galvanic corrosion of magnesium alloy AZ91 D in contact with zinc, aluminium alloy A380 and 4150 steel. Specially designed test panels were used to measure galvanic currents under salt spray conditions. It was found that the distributions of the galvanic current densities on AZ91D and on the cathodes were different. An insulating spacer between the AZ91 D anode and the cathodes could not eliminate galvanic corrosion. Steel was the worst cathode and aluminium the least aggressive to AZ91D. Corrosion products from the anode and cathodes appeared to be able to affect the galvanic corrosion process through an "alkalisation", "passivation", "poisoning" effect or "shortcut" effect.

JP 2001335973A aims to provide a method for protecting the corrosion of a base post type aluminum construction in which the corrosion at a connection part of a steel base post with an aluminum structural member is prevented. In the method for protecting the corrosion of a base post type aluminum facility body where the aluminum structural member formed of aluminum or aluminum alloy is connected to the steel base post formed of galvanized steel or stainless steel, an insulator for electrically insulating contact surfaces of the steel base post and the aluminum structural member, or a sacrifice anode which has less adhesion of the corrosion product and has electric potential 100 mV baser than the re-passivation electric potential of the aluminum structural member is interposed between the contact surfaces.

JP 2003341547A aims to provide a vehicular roof panel mounting structure preventing coating failure by eliminating an electric joining portion between dissimilar metals, resolving the occurrence of electrolytic corrosion, enabling the use of aluminum roof facilitating being separately made from a steel roof. An aluminum roof panel is mounted to steel bodies by mechanical joints through a joint panel coated in advance. The steel panels and the aluminum panel are mechanically joined to each other through the joint panel coated on the surface thereof in advance, so that an electric joint portion between dissimilar metals does not exist. Consequently, the generation of electrolytic corrosion is effectively suppressed, and there is no fear of causing chemical conversion failure (coating failure) at the time of electrodeposition to the aluminum member side.

US 2003/067187 A1 concerns an open hem flange for a vehicle door includes an inner reinforcing panel and an outer panel having a first outer portion and a second inner portion folded about the inner panel at a base. The inner reinforcing panel includes dimpled sections against the second outer portion, which provides a gap between the inner panel and the second inner portion of the outer. A gap also exists between the inner reinforcing panel and the outer portion of the outer panel to allow the hem flange to be properly cleaned and electro-coated.

EP 1,146,145 A provides a coated steel sheet having a zinc phosphate coating containing Mg on a surface of a galvanized steel sheet, and having an orthophosphoric acid ester-containing coating, and the method for making the same. This coated steel sheet has no coating fall-off even during a chemical conversion treatment step of an automobile producing line and has excellent perforative corrosion resistance either with no-painting or after electrodeposition painting, chemical conversion treatability and press formability.

EP 1,806,200 A1 discloses a method for joining an iron member and an aluminum member. A steel sheet composed mainly of iron and an aluminum sheet composed mainly of aluminum are joined, wherein the steel sheet has a zinc-containing zinc plated layer formed on a joining side, and the steel sheet and the aluminum sheet are partially stacked and spot-welded while the zinc plated layer is sandwiched therebetween.

### SUMMARY OF THE INVENTION

It is an object of the present invention to provide a vehicle with an improved corrosion resistance metal structure assembly with a synergistic effect which effectively slows down the build up of corrosion of the metal structure assembly as well as prevents local corrosive attacks. The above mentioned draw backs are at least partly solved by a vehicle comprising a metal structure assembly with an improved corrosion resistance comprising the features recited in claim 1.

In an application according to the present invention, the first metal member is a formed vehicle sheet metal structural part and the second metal member is another vehicle component, which surface is contacting the first member. In a preferred application according to the present invention, the first metal member is a vehicle inner door frame structure and optionally the second metal member is a vehicle door outer panel. The concept of using the metal assembly in the vehicle doors have been found to be very advantageous due to the harsh environment vehicle doors are subjected to. Hence, pressed stamp sheet steel based metal structures are very suitable for the present metal assemblies. The first metal member may be pressed stamp sheet steel based metal structure.

In an embodiment according to the present invention, the second metal member comprises a coating free surface at the first attachment area. The coating free surface may be a surface free of anti corrosive treatment or a surface free from paint coating. The coating free surface may have an area of at least twice the area of the attachment area. It may further surround the attachment area. As is understood, the spread over a relatively large surface area, so that its unavoidable attack is spread over a relatively large surface area, and thereby is acceptable

### BRIEF DESCRIPTION OF THE DRAWINGS

The present invention will hereafter be described in greater detail and with reference to the accompanying figure, in which;
figure 1 shows a schematic illustration of a vehicle door in which the metal assembly according to the present invention is very useful;
figure 2a-2b shows a different schematic view of sections of a vehicle door as shown in figure 1;
figure 3 shows a diagram with corrosion test results;
figure 4 shows a diagram with test conditions;
figure 5 shows a diagram with corrosion test results;
figure 6 shows a diagram with corrosion test results;
figure 7 shows a test sample assembly and;
figure 8 shows a test sample assembly.

### DETAILED DESCRIPTION OF PREFERRED EMBODIMENTS

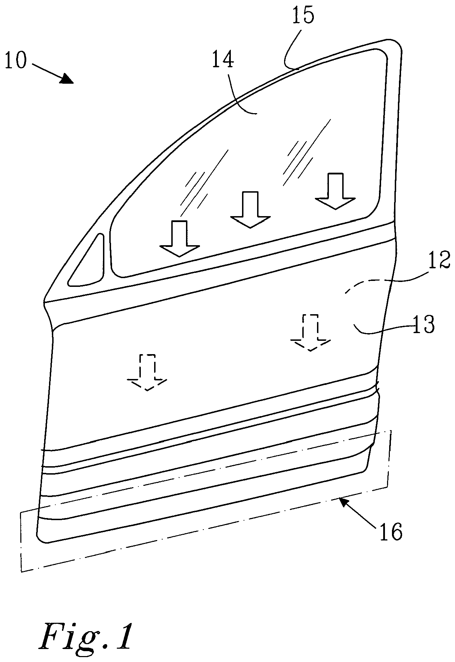

Figure 1 shows a vehicle door 10 with a metal structure assembly having an improved corrosion resistance, according to the present invention. In this non-limiting embodiment according to the present invention, the metal structure assembly has at least a first and a second metal member, the first metal member is a vehicle door inner frame structure, such as an inner panel, while the second metal member is an aluminium outer panel attached thereto. The vehicle door inner frame structure comprises a steel material with a ZnMg based coating to prevent corrosion of the steel material.

The steel sheet is provided with a ZnMg coating by means of a hot dip with zinc, magnesium and aluminium alloying elements. The ZnMg based alloy coating can for instance be a zinc alloy containing 0.8 - 3.5 weight % aluminium and 0.8 - 10.0 weight % magnesium. These amounts of magnesium and aluminium provides in itself a coating with a high corrosion resistance, a good surface quality, a good formability, and good welding properties at limited extra costs as compared to conventional hot dipped galvanising.

However, the inventors have now found a synergistic effect when attaching a steel sheet with a Zn and Mg based alloy coating with an aluminium alloy member, preferably selected from the AA4000-AA6000 series. As will be shown, a remarkable corrosion resistive metal structure assembly is achieved by this combination.

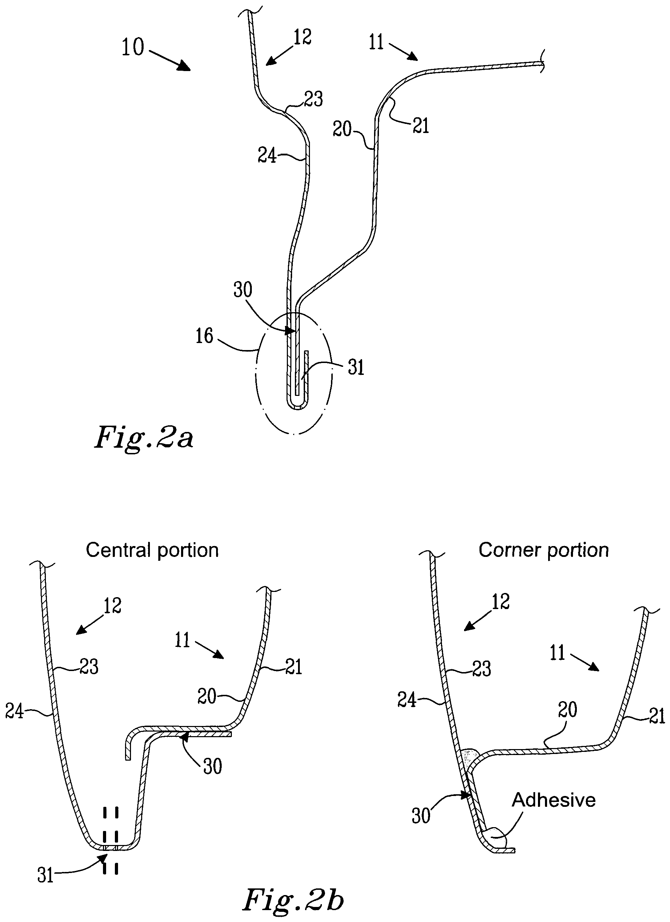

A very useful implementation area for the present invention will hereafter be illustrated in figure 1. Figure 1 shows a vehicle door 10 having a vehicle door inner frame structure 11 (not shown), an outer panel 12, an inner panel 13, and a movable glass window 14. The vehicle door 10 is an automotive vehicle door and has an upper and lower edge 15, 16 the lower edge is intended to face towards the ground when the vehicle is in its ready to use position, while the upper edge is intended to be closer to the roof of the vehicle. The metal assembly, according to the present invention, is very well suited for combining the inner and outer door structure, such as the one described below. Turning to figure 2 which shows a close up of the lower edge 16 of the vehicle door 10, in this case a typical, hemmed door bottom design, where the vehicle inner door frame structure 11 of the vehicle door 10 comprises a first and a second surface 20, 21. At a first attachment area 30, the first surface 20 of the vehicle inner door frame structure 11 is attached to the inner surface 23, i.e. the surface which faces towards the inner of the vehicle door 10, of the outer panel 12. The inner surface 23 is also called the first surface 23 of the outer panel 12. As can be seen further, a second attachment area 31 is formed as the second surface 21 of the inner door frame structure 11 is attached to the inner surface 23. For the purpose of the present invention, the vehicle inner door frame structure 11 corresponds to the first metal sheet and the outer panel 12 corresponds to the second metal sheet. Figure 2b shows a close up of an alternative lower edge 16, i.e. a door bottom design, of the vehicle door 10. The vehicle inner door frame structure 11 of the vehicle door 10 comprises a first and a second surface 20, 21. At a first attachment area 30, the first surface 20 of the vehicle door 10 is attached to the inner surface 23, i.e. the surface which faces towards the inner of the vehicle door 10, of the outer panel 12. The inner surface 23 is also called the first surface 23 of the outer panel 12. For the purpose of the present invention, the vehicle door frame structure 11 corresponds to the first metal sheet and the outer panel 12 corresponds to the second metal sheet. As can be seen a drainage opening 31 is arranged below the attachment area 30 to drain any liquid which could assemble inside the vehicle door 10.

It has been found that the present invention is particularly useful in this technological field since vehicle doors, like the one just described, are very perceptive to corrosion due to their exposed environment.

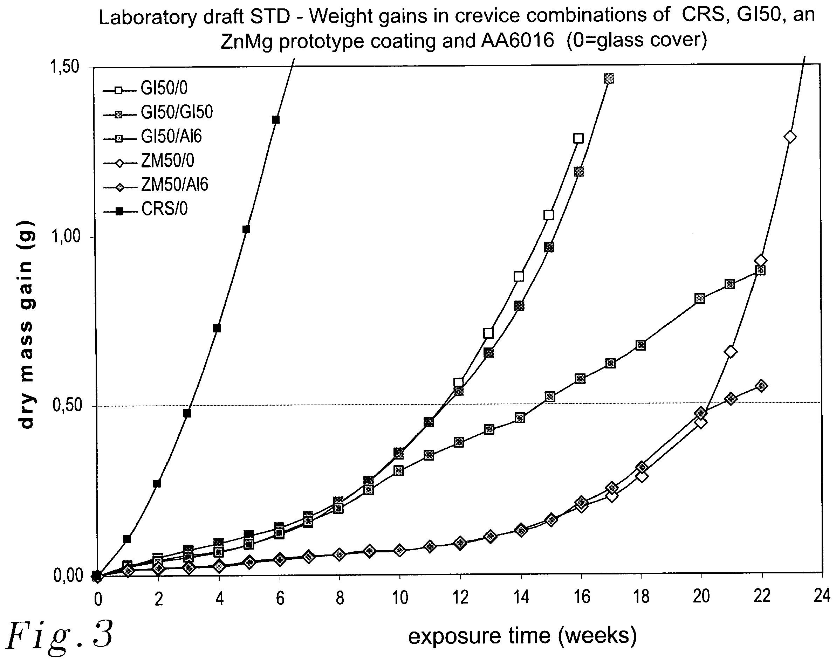

The surprisingly improved corrosion resistance is clearly shown in figure 3, which shows a diagram in which dry mass gain (measured in grams) caused by formation of insoluble corrosion products is plotted against time (weeks) for different samples of metal assemblies. The dry mass test method is outlined further below.

Figure 3 shows a comparison of corrosion weight gains of cold-rolled steel, zinc-coated steel GI50, i.e. 50g/m² which is a standard Zn coating applied to a steel sheet with hot dip galvanization to a Zn layer thickness of about 7 µm on each side of the steel sheet, and ZM50, which is steel coated with a Zn layer alloyed with Mg, deposited as outlined above to a thickness of about 7 µm thickness. The designations GI50/0 and ZM50/0 means that each coated steel is exposed under a glass sheet (0= glass sheet) forming a wedge crevice. The GI50/GI50 sample is two steel sheets assembled together, each with a GI50 alloy. The coatings are compared also in electrical contact to an AA6016 aluminium sheet cover, all in the same standard crevice test configuration and under the test conditions described herein. (GI50/AI6 and ZM50/AI6 respectively).
The Cold rolled steel (CRS/0) corroded through after 9 weeks (0,8 mm steel), the GI50 with glass cover (GI50/0) corroded through after 21 weeks (0,8 mm steel). Samples with aluminium cover where ended fore analysis after 22 weeks. Only those with verified remaining electric contact between the sheets have been incorporated in the comparison. As can readily be seen in figure 3, the ZMA50/AI6 sample, which is a steel sheet with a ZM50 alloy coating assembled with an aluminium alloy sheet, shows a remarkably low dry mass gain, even after 24 weeks of testing.
Aluminium sheet (AA6016) on GI50 coated steel corroded through 1 mm after 20-21 weeks, but steel plate base metal was almost uncorroded.
Weight loss of aluminium sheet (AA6016) on ZnMg prototype coated steel after 22 weeks was only half that of Al cover on GI50 and with smoother attack. The ZnMg-coated steel base material was only slightly attacked.

The weight gains in figure 3, are originating from corrosion of first zinc or zincmagnesium-coatings, then by rust formation. It is only when the metal assembly curves separates from the non metal assembly curve that the aluminium plate starts to corrode fully by galvanic interaction with the contiguous exposed steel. For the GI50 zinc-coated sample, this occurs at approximately 9 weeks, whereas for the zinc-magnesium coated steel it is only at about week 20 that the metal assembly curves separates from the non-metal assembly curves and aluminium starts to corrodes fully. This can seen as the ZM50/AI6 substantially follows the GI50/AI6 graph after 20 weeks.

A 24 weeks test nominally corresponds to12 years in field service.
It is believed that the aluminium/ZnMg-coated steel combination will pass without penetration and constitute a case where both aluminium and steel attack are moderated to acceptable levels. It should be noted that this experiment constitutes conditions where the exposed aluminium and attacked coated steel surfaces were of equal area. Considerable improvement in service life expectancy can be made by ensuring that the exposed bare aluminium surface in effective galvanic contact with the attacked ZnMg-coated steel can be made effectively larger than the area where the ZnMg coating has been consumed with left steel exposed. This is accomplished by not having the areas under corrosive load painted or just poorly protected by paint or any other coating. Under the assumption that wet crevices (hems, weld joints) are the service-life limiting corrosive condition, it can be utilized that in the adjacent open areas outside the crevice, the ZnMg will be intact for a considerably longer time than in the crevice, whereas the aluminium will be available to participate in the galvanic protection of the attacked, steel-exposing area in the crevice. Then the consumed aluminium will be distributed over a larger area and the risk of aluminium penetration will be further reduced. The general corrosion rate of freely exposed aluminium is quite low, so paint is not required for this reason, and the same applies for ZnMg in open exposure, provided not under considerable dirt load.

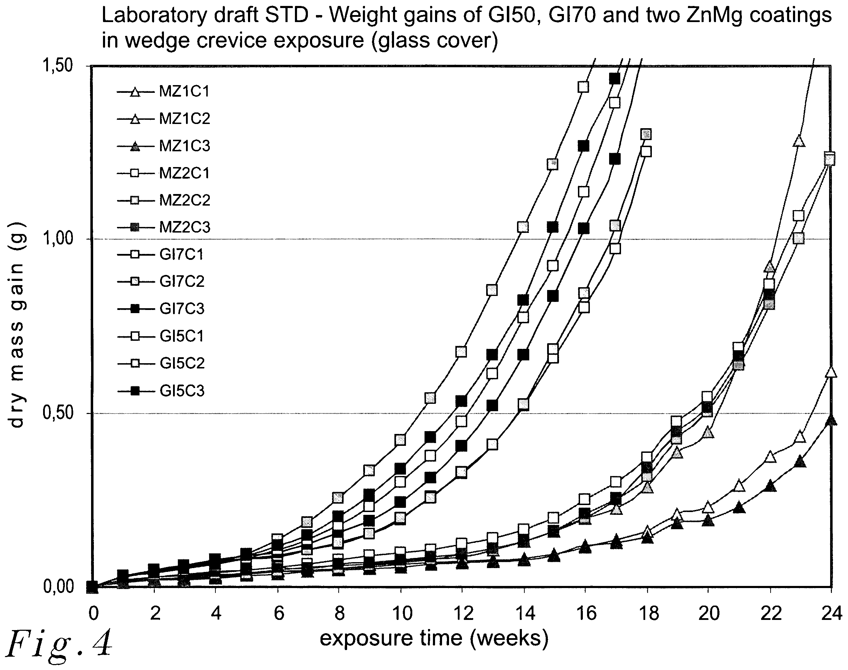

The above findings are supported in figure 4, which shows a comparison of corrosion weight gains of cold-rolled steel coated with traditional hot-dip zinc of two coatings weights (GI501-GI503 triplicate samples with 50 g/m2 and GI701-GI703 triplicate samples 70 g/m2), and two different ZnMg prototype coatings (ZM101-103 triplicate samples and ZM201-203 triplicate samples), all in the same standard crevice test configuration and under the test conditions described herein. The 0.8 mm thick GI50 coated panels perforated after 21 weeks. The dry mass gain is proportional to weight loss after removal of corrosion products.

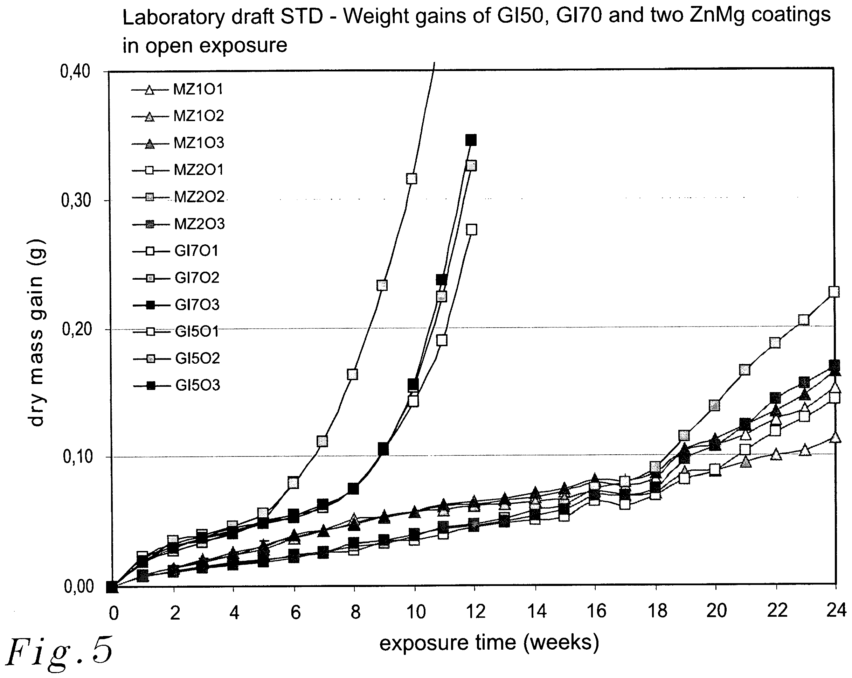

Further, figure 5 shows a comparison of corrosion weight gains of cold-rolled steel coated with traditional hot-dip zinc of two coatings weights, 50 and 70 g/m2, and two different ZnMg prototype coatings, all in the same standard open test configuration and under the test conditions described herein. Note the general lower corrosion rates (different Y-axis scale) compared to figure 4 and that the ZnMg coatings are comparatively much more corrosion resistant than the traditional GI coatings in this open exposure mode.

Without being bound by theory, it is believed that the Mg-containing passive layer that is present in the zinc-magnesium alloy has the ability to impede the primary, but weak galvanic effect from the aluminum alloy, which otherwise tends to somewhat enhance the dissolution of the zinc layer and shorten the incubation time before the galvanic attack of the aluminum alloy sets in from the underlying steel. When the zinc-magnesium contacting layer eventually is consumed, there are less local attacks formed in the steel base compared with conventional zinc coatings. The absence of such active sites in the corroded zinc-magnesium coated steel is reducing the attack on the adjacent aluminum alloy, and no deep-seated local pits are formed, but instead there is an even, more shallow mode of attack on the aluminum side. This moderated aluminum corrosion in turn is sufficient to prevent the steel side from further attack. Hence, a synergetic effect seems to be present, where the overall system corrosion rate is considerably reduced and local attacks in the form of deep-seated local pits are effectively prevented. In a vehicle service-life perspective this means a substantially enhanced time to penetration of any of the sheet constituents. Our test results suggest that systems with this material combination can be used in corrosive environments without extraordinary protection measures. It even suggests that conventional add-on sealing or wax-protection become obsolete even in a 12-year perforation warranty perspective. The protection concept is ready for use in any combination of coated steel to aluminum. The increased corrosion protection of the coating itself (by its ability of forming a stable passivating barrier coating) also has a good chemical and electro-chemical compatibility with aluminum. Hence, the corrosion of the zinc-alloy coating will not be increased by the impact of the contacting aluminum, which sometimes is the case for pure zinc coatings. This will enable the barrier properties of the zinc-magnesium alloy coating to stay intact and the dissolution of the coating in contact crevices will be very slow, postponing the exposure of the underlying steel considerably and, hence, avoiding the galvanic interaction between steel and aluminum for a very long time. These results indicate that regular sealing measures, used for conventional contacts between zinc-coated steels are sufficient also in mix aluminum/steel combinations. Additional protection measures like wax can be omitted and it might even be sufficient to joint aluminium to zinc-magnesium coated steel without any further protection measures, provided the zinc-alloy coating is not too thin, preferably in the range of >7 µm, more preferably 7-12 µm.

The second metal member comprises at least a first and a second surface, wherein the first surface is free from coating in the vicinity of the first attachment area as well as in the attachment area. As the inventors have found, a free surface around, and at, the first attachment area provides a good surface area relationship without coating. This is really contradictive with respect to the prior art, as it has been believed that aluminium surfaces needs to be coated, e.g. by sealing wax (e.g. via electro dip sealing) or paint when in contact with steel.

Following the preferred example given above with the vehicle door and with reference to figure 2, the outer panel 12 can be coated on its outer surface 24 while left uncoated on its inner surface 23. Furthermore it is realized that the inner surface 23 of the vehicle door 10 does not need additional seam sealing or anti corrosive treatment. Therefore, in an embodiment according to the present invention, the aluminium metal member has an anti corrosive treatment free surface at and around the first attachment area 30, and optionally an anti corrosive treated surface well separated from the first attachment area. An even more preferred embodiment according to the present invention, is that the first surface 20 of the inner vehicle door frame structure 11 is uncoated to provide a coating free surface.

Thus an anti corrosive treatment free surface at and around the first attachment area 30, or the second attachment area 31 is very advantageous.

### Dry mass gain test

The dry mass gain, as shown in figures 3-5 have been measured using a standardized corrosion crevice test during which two metal sheets are held together. The atmospheric corrosion test, i.e. the dry mass gain test, used to generate the result that forms the fundament for this application represents the worst vehicle conditions in terms of full access to the salt load and humidity. It serves as a general purpose atmospheric corrosion test and applies different materials, coatings, and interactions of materials, both as test specimens or in a designed component. The test is a standardized global corporate test procedure for laboratory corrosion testing. It is specially designed to correlate well to on-vehicle field performance for designs forming crevices, like weld joints and over-hemmings, which usually constitute the most engraving corrosive conditions on vehicles in field service. Two weeks of testing approximates one year in the most corrosive road environments, making the current test results to represent close to full vehicle service life conditions.

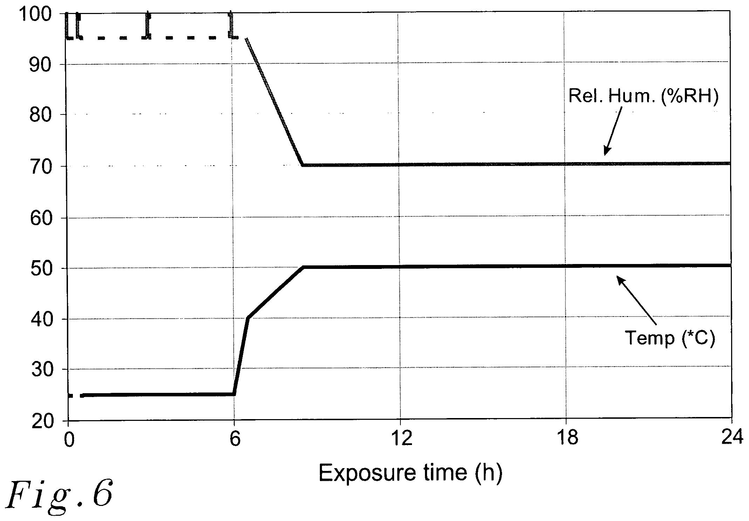

The daily test procedure consists of a 6 h wet phase at room temp. with intermittent exposure to salt solution (0.5% NaCl) followed by a 2.5 h transition procedure with drying under climate control and a 15.5 h period with constant temperature and humidity (50°C, 70% RH). To this is added a 48 h weekend procedure under continued constant climate control. See figure 6 for a work day (Monday-Friday) test cycle. The reference coupons used in the referred test of this application has been described to depth in a recent publication (M.Strom, G. Strom and G. Strannhage, "New aspects on the atmospheric corrosion of bare and zinc coated steels in accelerated testing", Eurocorr07, Maastricht 2007.) The test design has been adopted of e.g. the French Corrosion Institute, where the design is currently used in a large project with the intention to objectively evaluate the quality of all major corrosion tests used in the automotive industry.

### Test specimen configuration

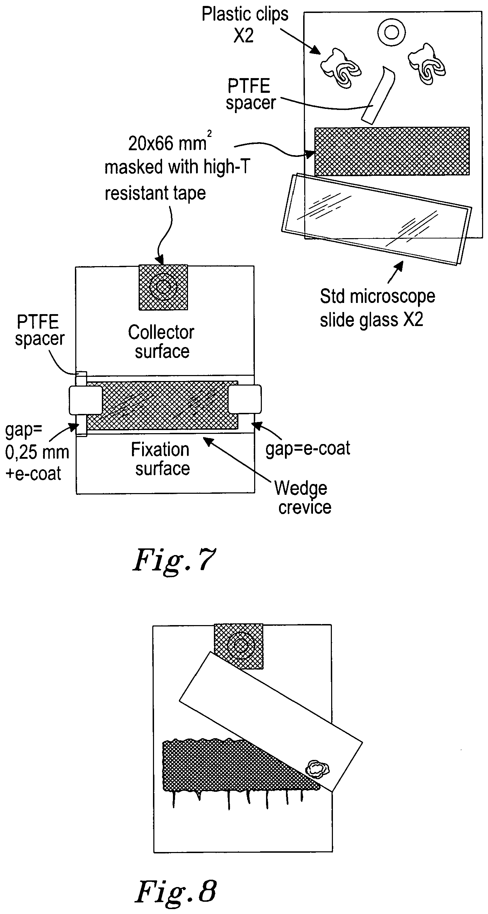

Alloy coated steel, e.g. Zinc (alloy)-coated or uncoated metal sheets from coil (gauge typically 0.7-1.0 mm), were laser-cut to flat test coupons, also referred to as sheets, 76 x 100 mm². A high-temperature resistant polyester tape (Shercon PC21) was used to mask a rectangular portion 66 x 20 mm² centered on the specimen surface with its upper edge 50 mm below the panel top according to figure 7 The specimens have been phosphated and electro-coated on fixation racks in the Volvo Cars Torslanda paint shop (Chemetall, Gardobond 2600 + Gardolene 6800 - 6, BASF Cathoguard 350 FT25 - 7490). After curing, the tape is removed and usually moved to protect the fixation position instead. For open exposure the panel is now ready for use. For testing in crevice condition a PTFE sheet of 0.25 mm thickness is applied on the electro-coated portion on one of the sides of the previously masked area. The comparative test material, e.g. an aluminium alloy metal member 76 x 26 mm², are then centered and stacked over the exposed metallic surface and fixed in this position with two plastic clips found suitable for this purpose. In this way we have created a reproducible wedged confinement, 0.25 mm + the electro-coat thickness (ca 20 µm) on one side and the electro-coat thickness only on the other side.

In the corrosion tests the panels have been exposed at an inclination of 15 (+ 5°) to the normal (horizon) in plastic racks. The panel area above the exposed metallic portion will then act as a constant-area collector to salt-containing downfall. Note that the metallic surface is not exposed at the crevice mouth, but 3 mm inwards. This is a "digital" compromise to the gradual electro-coat thinning in real overlap flanges. For the remaining samples the glass slide was simply changed for an aluminum member.

Figure 8 shows an example of crevice sample with electrically connected metallic cover. Here shown partly removed after exposure (cover in stainless steel on base plate in cold rolled-steel). Electrical stainless screw connection insulated from environment by butylic rubber on all sides. This is the configuration for mix-metal galvanic evaluation addressed in this document.

## Claims

1. A vehicle comprising a metal structure assembly with an improved corrosion resistance comprising a first and a second metal member (11, 12),
said first metal member (11) comprises a steel sheet having a first surface (20), said first surface (20) is coated with at least one alloy, said second metal member (12) is an aluminium alloy member having a first surface (23), and said first surface (20) of said first metal member (11) is attached to said first surface (23) of said second metal member (12) at at least a first attachment area (30),
**characterized in that** said at least one alloy is a Zn_{X}Mg_{Y} based alloy, namely a ZnMg based alloy coating, provided by means of a hot dip with zinc, magnesium and aluminium alloying elements, and containing 0.8 - 3.5 weight % aluminium and 0.8 - 10.0 weight % magnesium, and **in that** said second metal member (12) comprises a coating free surface at said first attachment area (30) at which the aluminium alloy is substantially free to corrode.

2. The vehicle according to claim 1, **characterized in that** said coating free surface has an area of at least twice the area as said first attachment area (30).

3. The vehicle according to claim 2, **characterized in that** said coating free surface area surrounds said first attachment area (30).

4. The vehicle according to any of the preceding claims, **characterized in that** said first metal member (11) and second metal member (12) forms part of a door of said vehicle.

5. The vehicle according to claim 4, **characterized in that** said first metal member (11) is a vehicle inner door frame structure (11).

6. The vehicle according claim 4 or 5, **characterized in that** said second metal member (12) is a vehicle door outer panel (12).

## Patentansprüche

1. Fahrzeug, das eine Metallstrukturanordnung mit einer verbesserten Korrosionsbeständigkeit umfasst, die ein erstes und ein zweites Metallglied (11, 12) umfasst, wobei das erste Metallglied (11) eine Stahlplatte umfasst, die eine erste Oberfläche (20) aufweist, wobei die erste Oberfläche (20) mit mindestens einer Legierung überzogen ist, wobei das zweite Metallglied (12) ein Aluminiumlegierungsglied ist, das eine erste Oberfläche (23) aufweist, und wobei die erste Oberfläche (20) des ersten Metallglieds (11) mindestens an einer ersten Befestigungsfläche (30) an der ersten Oberfläche (23) des zweiten Metallglieds (12) befestigt ist,
**dadurch gekennzeichnet, dass** die mindestens eine Legierung eine Legierung auf Zn_{X}Mg_{Y}-Basis, nämlich ein Legierungsüberzug auf ZnMg-Basis, ist, die mittels Heißtauchen mit Zink-, Magnesium- und Aluminiumlegierungselementen bereitgestellt wird und 0,8 - 3,5 Gew.-% Aluminium und 0,8 - 10,0 Gew.-% Magnesium enthält, und dass das zweite Metallglied (12) eine überzugsfreie Oberfläche an der ersten Befestigungsfläche (30) umfasst, an der die Aluminiumlegierung im Wesentlichen frei korrodieren kann.

2. Fahrzeug nach Anspruch 1, **dadurch gekennzeichnet, dass** die überzugsfreie Oberfläche eine Fläche aufweist, die mindestens doppelt so groß wie die Fläche der ersten Befestigungsfläche (30) ist.

3. Fahrzeug nach Anspruch 2, **dadurch gekennzeichnet, dass** die überzugsfreie Oberfläche die erste Befestigungsfläche (30) umgibt.

4. Fahrzeug nach einem der vorhergehenden Ansprüche, **dadurch gekennzeichnet, dass** das erste Metallglied (11) und das zweite Metallglied (12) Teil einer Tür des Fahrzeugs bilden.

5. Fahrzeug nach Anspruch 4, **dadurch gekennzeichnet, dass** das erste Metallglied (11) eine innere Fahrzeugtürrahmenstruktur (11) ist.

6. Fahrzeug nach Anspruch 4 oder 5, **dadurch gekennzeichnet, dass** das zweite Metallglied (12) eine Fahrzeugtüraußenbeplankung (12) ist.

## Revendications

1. Véhicule comprenant un ensemble de structure métallique avec une résistance à la corrosion améliorée, comprenant un premier et un deuxième organe métallique (11, 12), ledit premier organe métallique (11) comprenant une tôle d'acier ayant une première surface (20), ladite première surface (20) étant revêtue d'au moins un alliage, ledit deuxième organe métallique (12) étant un organe en alliage d'aluminium ayant une première surface (23), et ladite première surface (20) dudit premier organe métallique (11) étant attachée à ladite première surface (23) dudit deuxième organe métallique (12) au niveau d'au moins une première zone de fixation (30),
**caractérisé en ce que** ledit au moins un alliage est un alliage à base de ZnₓMg_{y}, à savoir un revêtement d'alliage à base de ZnMg, pourvu, par le biais d'une immersion à chaud, d'éléments d'alliage de zinc, de magnésium et d'aluminium et contenant 0,8 à 3,5 % en poids d'aluminium et 0,8 à 10,0 % en poids de magnésium et **en ce que** ledit deuxième organe métallique (12) comprend une surface exempte de revêtement au niveau de ladite première zone de fixation (30) au niveau de laquelle l'alliage d'aluminium est sensiblement libre de se corroder.

2. Véhicule selon la revendication 1, **caractérisé en ce que** ladite surface exempte de revêtement présente une zone au moins deux fois plus grande que la zone au niveau de ladite première zone de fixation (30).

3. Véhicule selon la revendication 2, **caractérisé en ce que** ladite zone de surface exempte de revêtement entoure ladite première zone de fixation (30).

4. Véhicule selon l'une quelconque des revendications précédentes, **caractérisé en ce que** ledit premier organe métallique (11) et ledit deuxième organe métallique (12) font partie d'une porte dudit véhicule.

5. Véhicule selon la revendication 4, **caractérisé en ce que** ledit premier organe métallique (11) est une structure de cadre de porte intérieure (11) du véhicule.

6. Véhicule selon la revendication 4 ou 5, **caractérisé en ce que** ledit deuxième organe métallique (12) est un panneau extérieur de porte (12) du véhicule.
